(19) Europäisches Patentamt

European Patent Office

Office européen des brevets

(11) Veröffentlichungsnummer: **0 286 732 B1**

(12) **EUROPÄISCHE PATENTSCHRIFT**

(45) Veröffentlichungstag der Patentschrift: **06.05.92**

(51) Int. Cl.5: **H01M 4/88**, H01M 4/98, C25B 11/00

(21) Anmeldenummer: **87118809.0**

(22) Anmeldetag: **18.12.87**

(54) Verfahren zur Herstellung von Katalysatorelektroden mit strukturell verbundenem Trägerkörper.

(30) Priorität: **14.03.87 DE 3708296**

(43) Veröffentlichungstag der Anmeldung:
**19.10.88 Patentblatt 88/42**

(45) Bekanntmachung des Hinweises auf die Patenterteilung:
**06.05.92 Patentblatt 92/19**

(84) Benannte Vertragsstaaten:
**DE FR GB IT**

(56) Entgegenhaltungen:
US-A- 4 251 344
US-A- 4 603 060

(73) Patentinhaber: **Deutsche Automobilgesellschaft mbH**

**W-3000 Hannover(DE)**

(72) Erfinder: **von Benda, Klaus, Dr.**
**U.v.Ensingen-Strasse 3**
**W-7440 Nürtingen(DE)**
Erfinder: **Gutmann, Günter, Dr.**
**Stettener Strasse 33/1**
**W-7300 Esslingen(DE)**
Erfinder: **Hildner, Hans-Joachim**
**Triebweg 113**
**W-7000 Stuttgart 30(DE)**

(74) Vertreter: **Wittner, Walter et al**
**c/o Daimler-Benz AG Patentabteilung - TPA**
**Postfach 60 02 02**
**W-7000 Stuttgart 60(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.08/2.19/2.0)

## Beschreibung

Die Erfindung beschreibt ein Verfahren zur Herstellung von Katalysatorelektroden, insbesondere ein Verfahren zur Formgebung der Katalysatorschicht auf einem Trägerkörper.

Katalysatorelektroden bestehen wenigstens aus einem stromleitenden Katalysatorträger und einer aktiven Katalysatorschicht, die Ort der elektrochemischen Reaktion ist. Gasdiffusionselektroden, die gasförmige Reaktanten umsetzen, tragen gasseitig meist noch eine hydrophobe Deckschicht. Als Katalysatorträger dienen beispielsweise Metallnetze, Lochbleche, Streckmetalle, offenporige Metallschaumkörper oder Fasergerüste. Auf diese Substrate werden die Katalysatorschichten aufgetragen.

Gebräuchliche Verfahren sind das Aufpressen (technisch meist durch Walzen durchgeführt) von binderhaltigen Katalysatorpulverschüttungen (siehe z. B. in DE-PS 23 02 867) oder vorgewalzten Fellbahnen (DE-OS 29 41 774) auf Metallnetzsubstrate; gewalzt werden auch fluidhaltige, teigartige Pasten aus Katalysator, Binder und einem nichtwässrigen Fluid, gegebenenfalls unter Zusatz eines Porenbildners (US-PS 3 943 006, US-PS 4 585 711), oder wässrige Pasten aus Katalysator und PTFE-Dispersion, die ein Tensid enthalten (T. Kenjo, Bull. Chem.Sos.Jpn. 54, (1981), 2553-2556). Weitere gebräuchliche verfahren sind das Sedimentieren von wässrigen Aufschlämmungen des Katalysators auf Netze, wobei die Aufschlämmung hydrophobe und/oder hydrophile Zusatzstoffe sowie Filterhilfsmittel enthalten kann (z.B. DE-PS 27 20 529, DE-OS 16 71 446 und DE-AS 20 37 795), das Siebdrucken von wässrigen Katalysatorpasten auf Substrat und hydrophobe Deckschichten (z.B. US-PS 4 250 235, Spalte 4, 1. Absatz) und das Aufsprühen oder das Einrakeln wässriger, Verdicker enthaltende Katalysatorsuspensionen auf (bi-)poröse Nickelplatten (in der US-PS 3 556 856). Soweit der Binder PTFE ist, wird nach der Formgebung häufig noch die Wärmebehandlung zum Sintern und Verteilen des PTFE angeschlossen.

Aus der US-PS 4 603 060 ist ferner ein Verfahren zur Herstellung von Elektroden für elektrolytische Zellen bekannt. Die in dieser Schrift angegebenen katalytischen Pasten werden dabei durch Einrollen auf ein Kohlepapier aufgebracht. Anschließend wird das mit der Paste versehene Substrat auf eine höhere Temperatur erhitzt, um auf dem Trägerkörper für die Elektrode eine katalytisch wirksame Schicht zu erhalten.

Die US-PS 4 251 344 bezieht sich auf eine Paste und auf eine Elektrode, bei der eine poröse Nickelschicht auf einem Substrat aufgebracht ist. Nach dem Aufbringen der Paste auf dem Substrat sind dann sieben, teilweise verfahrensmäßig sehr umständliche Schritte notwendig um den beschichteten Trägerkörper für die Elektrode zu erhalten; vor allem auch, weil die Konzentrationsverhältnisse der Pastenbestandteile, die Konzentrationsverhältnisse von Laugen und Umsetzungs-Temperaturen ganz exakt eingehalten werden müssen.

Zusammenfassend ausgedrückt, sind alle diese Herstellungsverfahren verhältnismäß sehr aufwendig, da eben die Arbeitsbedingungen zur Erzielung gleichmäßiger und gleichzeitig gut zu reproduzierbaren Produkte sehr genau eingehalten werden müssen und größtenteils ist auch ein erheblicher mechanischer Aufwand bei der Verfahrensdurchführung notwendig.

Der Erfindung liegt daher die Aufgabe zugrunde, ein einfaches und schnell durchzuführendes Verfahren zur Herstellung von Katalysatorelektroden mit einem strukturell verbundenem Trägerkörper zu schaffen, das vor allem auch ausgezeichnete reproduzierbare Produkte mit sich bringt. Eine weitere Aufgabe besteht in der Verwendung einer pastösen, bindemittelhaltigen Katalysator-Suspension bei der Herstellung von Katalysatorelektroden.

Die gestellte Aufgabe wird bezüglich des Verfahrens mit den Merkmalen des Patentanspruches 1 gelöst. Mit dem Anspruch 7 wird die Verwendung einer Katalysator-Suspension in einem Beschichtungsverfahren gemäß dem erfindungsgemäßen Verfahren zur Herstellung von Katalysatorelektroden beansprucht.

In der Praxis wird bei der Herstellung der Katalysatorelektroden auf die Oberfläche des Trägerkörpers ein Überschuß an Suspension aufgebracht und der Überschuß durch Rotation des Trägerkörpers um eine senkrecht zu seiner Fläche stehende realen oder gedachte Achse abgeschleudert wird. Das Aufbringen des Überschusses kann auf die verschiedensten Arten geschehen. Besonderseinfach und deshalb bevorzugt ist ein Eintauchen der Trägerkörper in die Suspension oder ein Aufgieben der Suspension auf die Oberfläche des Trägerkörpers. Bei Trägerkörpern, die nur einseitig mit einer katalytischen Schicht versehen werden sollen, berührt man lediglich die Oberfläche der Suspension mit der zu beschichtenden Trägerkörperfläche. Es ist aber auch möglich zwei einseitig zu beschichtende Trägerkörper flächig aneinander zu pressen und diesen so gebildeten Körper in die Katalysatorsuspension zu tauchen. Es werden dann nur die außen liegenden Flächen beschichtet und nach dem Auseinandernehmen der beiden Teile liegen dann zwei Katalysatorelektroden, die nur einseitig beschichtet sind, vor. Insbesondere bei kreisrunden herzustellenden Katalysatorelektroden mit größeren Abmessungen ist es vorteilhaft, die zu beschichtenden Trägerkörper auf einer durch den Kreismittelpunkt gehenden Achse anzuordnen. Die Trägerkörper brauchen dann nur noch senkrecht oder schräg zur Suspensionsoberfläche teilweise in die Suspension eingetaucht zu werden und lassen sich durch langsame Rotation um die Achse vollständig beschichten. Der Vorteil dieser Beschichtungsmethode liegt vor allem darin, daß nur eine geringe Menge an Suspension in dem Beschichtungsbehälter vorgelegt werden muß. Die zu beschichtenden Trägerkörper können einzeln oder in Abständen zu mehreren in einer geeigneten Halterung gehaltert mit der Suspension beschichtete werden. Bei den beschriebenen bevorzugten Beschichtungsweisen erfolgt die Beschichtung mit der Katalysatorsuspension praktisch immer im Überschuß, d.h. die aufgebrachte Katalysatorschicht ist dicker als die für die Katalysatorelektrode erforderliche Schicht.

Der Überschuß an Katalysatorsuspension wird nach dem Aufbringen durch Rotation des Trägerkörpers abgeschleudert. Dabei kann die Rotation sowohl um eine durch den Trägerkörper gehende Achse als auch um eine außerhalb des Rotationskörpers liegende Achse erfolgen, z.B. wenn die Elektrode an dem von einer Achse ausgehenden Arm befestigt ist. Die Haftung der Katalysatorschicht auf dem Trägerkörper wird durch ein geringfügiges Eindringen der Suspension in den Trägerkörper gefördert, da dadurch eine sehr gute mechanische Verbindung zwischen der Schicht und dem Trägerkörper erfolgt. Die Tiefe, bis zu der die Katalysatorsuspension in den Trägerkörper eindringt, hängt bei vorgegebener Pastenviskosität von der Zeit ab, während der der Überschuß der Suspension aufrecht erhalten wird. Als günstig haben sich dabei Zeiten zwischen zwei und zehn Sekunden erwiesen. Bei kürzeren Zeiten ist mitunter die Benetzung des Substrats nicht ausreichend gleichmäßig, bei längeren Zeiten kann, insbesondere bei sehr dünnen Trägerkörpern, ein zu großer Anteil des Trägerkörpers durch die Suspension ausgefüllt werden. Im allgemeinen ist die Beschichtung der Trägerkörper mit den genannten Zeiten gut durchzuführen.

Das Abschleudern der überschüssigen Katalysatorsuspension erfolgt mit einer solchen Drehzahl, daß die gewünschte Schichtdicke für die Katalysatorschicht erreicht wird. Üblicherweise reicht eine Schleuderzeit von zwei bis zehn Sekunden bei einer Drehzahl von 200 bis 2000 Umdrehungen pro Minute. Dünne Beschichtungen und/oder eine hohe Viskosität der Suspension bedingen längere Schleuderzeiten bzw. höhere Umdrehungszahlen. Zweckmäßigerweise erfolgt das Abschleudern der überschüssigen Katalysatorsuspension über dem Gefäß, in dem die Beschichtung vorgenommen wird. Die abgeschleuderte Suspension gelangt dadurch sofort in das Beschichtungsgefäß zurück und steht für den nächsten Beschichtungsvorgang wieder zur Verfügung. Nach dem Entfernen der überschüssigen Suspension durch Abschleudern muß die Katalysatorelektrode noch in an sich bekannter Weise getrocknet werden, z.B. bei einer Temperatur von etwa 80°C; sie ist dann gebrauchsfertig.

An die Eigenschaften des Trägerkörpers werden keine besonderen Anforderungen gestellt. Im Prinzip genügen gerauhte oder gewaffelte Lochbleche oder Netze den Anforderungen. Die Oberfläche der Substrate muß eine für die Haftung der Paste ausreichende Rauhigkeit aufweisen und die Porosität des Trägerkörpers hinreichend groß für die Gasabfuhr sein. Bevorzugt werden aus Gewichtsgründen Metallfaserkörper mit Porositäten über 80% oder metallisierte Kunststofffasergerüste. Sie verbinden hohe Leitfähigkeit mit guter Haftfestigkeit der aufgebrachten Katalysatorschicht.

Die mit dem Verfahren erzielbaren Vorteile liegen vor allen darin, daß mit einem Arbeitsgang und mit einer einheitlichen Technik sowohl ein- wie beidseitig bescchichtete Substrate hergestellt werden können. Die Schichtdicken der katalytisch aktiven Schicht sind außerordentlich gut reproduzierbar und die Schicht besitzt eine hohe Oberflächengüte, ohne daß mechanische, abrasionsfördernde Hilfen wie Abstreifer, Rakel, Walzen oder dergleichen verwendet werden müssen. Ferner eignet sich das Verfahren auch besonders gut zur Herstellung kreisscheibenförmiger Elektroden, die nach den herkömmlichen Verfahren schwer oder nur unter Inkaufnahme von Abfall hergestellt werden können. Weiterhin nützt das Verfahren optimal die Menge der Katalysatorpaste aus, weil der abgeschleuderte Pastenüberschuß ohne Durchführung besonderer Maßnahmen wieder verwendet werden kann.

Besonders vorteilhafte Anwendung findet die erfindungsgemäße Formgebungstechnik bei der Herstellung von Wasserstoff-Katalysatorelektroden für Nickel/Wasserstoff-Zellen. Im Zuge der Vereinfachung der Herstellung und Konstruktion derartiger Zellen ist man dazu übergegangen, die Katalysatorschicht ohne gesonderten Träger dicht mit dem Diffusionskörper zu verbinden. Der üblicherweise aus Kunststoffgeweben oder -netzen bestehende Diffusionskörper wird dazu durch ein leichtes, metallisiertes Kunststoff-Fasergerüst ersetzt, das die Funktion des Katalysatorträgers und des Diffusionskörpers vereinigt. Ferner werden die teueren Edelmetalle durch preiswertere katalytisch aktive Substanzen, z.B. Nickel und Nickellegierungen, insbesondere Raneynickel, ersetzt. Es kommen dabei sowohl Katalysatorelektroden zur Verwendung, bei denen der Diffusionskörper nur einseitig eine Katalysatorschicht trägt, als auch solche, bei denen der Diffusionskörper beidseitig mit einer katalytisch aktiven Schicht verbunden ist. Derartige Katalysatorelektroden sind z.B. in der DE-PS 28 35 503 beschrieben.

Zur Anwendung in dem erfindungsgemäßen, vorteilhafteren Formgebungsverfahrens wurde eine Katalysatorsuspension mit auf den Katalysator und das Verfahren abgestimmten Eigenschaften entwickelt. Sie wird in der Folge beispielhaft beschrieben.

Es hat sich dabei herausgestellt, daß für das vorliegende Beschichtungsverfahren gans besonders pastöse Katalysatorsuspensionen geeignet sind, die eine dynamische Viskosität vom 10 000 bis 50 000 mpa.s$^{-1}$ bezogen auf eine Schwergeschwindigkeit von D = 1.s$^{-1}$ und eine Temperatur von 20°C, und einen Feststoffgehalt von 55 bis 75 Gew.-% besitzen. Die dynamische Viskosität wurde mit einem Rotationsviskosimeter Haake RV 12, Meßsystem SV II gemessen und auf die Schergeschwindigkeit D = 1.s$^{-1}$ umgerechnet. Da die doppelt logarithmische Auftragung der dynamischen Viskosität Eta ($\eta$) gegen die Schergeschwindigkeit D für pseudoplastische Pasten eine Gerade ergibt, läßt sich die dynamische Viskosität für D = 1.s$^{-2}$ leicht extrapolieren. Als Katalysatormaterial wird depyrophorisiertes Raneynickel eingesetzt. Als Suspensionsmittel können Wasser, aber auch organische Lösemittel Verwendung finden, wobei Wasser naturgemäß bevorzugt wird. Zur Fixierung der Katalysatorpartikel enthält die Suspension auch stets noch ein Bindemittel. Dieses Bindemittel muß die Katalysatorschicht binden, ohne dabei ihre elektrische Leitfähigkeit wesentlich zu beeinträchtigen. Es muß deshalb in kleinen Zusatzmengen wirken und muß außerdem im Elektrolyten stabil sein. Eine Vielzahl derartiger Bindemittel, die im allgemeinen auch als Verdickungsmittel für die Suspension wirken, sind bekannt. Es handelt sich im allgemeinen um Polymere wie Methylzellulose, Carboxymethylzellulose, vernetzte Stärke, Polyvinylalkohol, Polyvinylpyrrolidon, Polythylenoxid, Polyacrylsäure und dergleichen. Als langkettige Polymere beeinflussen sie auch die Pastenrheologie, was zum Einstellen eines gewünschten Fließverhaltens der Katalysatorsuspension benützt werden kann. Als ganz besonders geeignet haben sich Methylzellulose, Polyvinylpyrrolidon und Polyethylenoxid oder Mischungen davon bewährt, die in Mengen von 0,1 bis 2 Gew.-% in der Suspension vorhanden sein sollen. Ganz besonders geeignet ist Polyethylenoxid mit einem Molekulargewicht von 600 000 oder größer (max. etwa 5 Millionen). Die Katalysatorschicht enthält ferner in an sich bekannter Weise noch ein Hydrophobierungsmittel, wobei als Hydrophobierungsmittel Flourkohlenstoffharze, insbesondere Polytetrafluorethylen, bevorzugt werden. Polytetrafluorethylen wird der Katalysatorsuspension in Mengen von etwa 2 bis 5 Gew.-% in Form einer Dispersion zugesetzt. Derartige Dispersionen sind im Handel erhältlich und enthalten üblicherweise eine geringe Menge eines nichtionischen Tensids als Hilfsmittel.

Der Feststoffgehalt, d.h. der Gehalt an Katalysatorpartikeln und Hydrophobierungsmittel soll etwa 55 bis 75 Gew.-% betragen. Bevorzugt wird ein Gehalt an Katalysatorpartikeln in der Lösung von etwa 60 bis 70 Gew.-%. Die Menge an Binde- oder Verdikkungsmittel wird so bemessen, daß die gewünschte Viskosität erreicht wird. Bei zu geringen Viskositäten besitzen die Katalysatorsuspensionen eine Neigung zum Absetzen der Partikel; bei zu hohen Viskositäten ist das Fließvermögen mangelhaft, was zu einer schlechten Beladbarkeit des Diffusionskörpers mit der Katalysatorsuspension und zu einer rauhen und ungleichmäßigen Beschichtung führt.

Beispiel 1

A Herstellung der Katalysatorsuspension

Zur Herstellung einer Katalysatorsuspension mit verhältnismäßig hoher Viskosität zur Beschichtung von senkrecht angeordneten Diffusionskörpern wurden 200 g Raneynickel (stabilisiert, titandotiert, Schüttgewicht 2,4 g pro cm$^3$) in einem etwa 0,5 l fassenden Gefäß aus Edelstahl mit 40 cm$^3$ Wasser sowie 8,8 cm$^3$ einer Polytetrafluorethylen-Dispersion (Handelsprodukt: 0,9 g Polytetrafluorethylen pro cm$^3$, mit 5 Gew.-% nichtionischem Tensid, bezogen auf den Feststoffanteil) versetzt und gerührt, bis die Masse zäh und knetbar wurde. Danach wurden weitere 40 cm$^3$ Wasser und 1,5 g Polyethylenoxid (Handelsprodukt, durchschnittliches Molekulargewicht 4 Millionen) zugegeben, kurz gerührt und über Nacht quellen gelassen. Danach wurde nochmals gut gemischt. Diese Suspension besaß einen Gewichtsanteil von ca. 68% Raneynickel sowie etwa 2,7 Gew.-% Polytetrafluorethylen und 0,5 Gew.-% Polyethylenoxid. Die Suspension wurde in ein wannenförmiges Gefäß umgefüllt, dessen Boden einen halbkreisförmigen Querschnitt besaß, dessen Radius etwa 1,5 cm größer war als der der zu beschichtenden Elektrodenscheiben.

b Beschichten der Elektrode

Die zu beschichtenden Diffusionskörper bestanden aus einem scheibenförmigen, vernickelten Kunststofasergerüst von 2,3 mm Dicke und einem Durchmesser von 8,65 cm. Die Porosität betrug etwa 86%, die Nickelbelegung 150 mg pro cm$^2$. Die Scheiben besaßen ein Mittelloch von 2 cm Durchmesser, an dessen Rand eine 1 cm breite, 0,6 cm dicke zur Elektrodenmitte weisende Nickelblechfahne befestigt war. Diese Scheiben wurden auf eine Achse mit einem Durchmesser von 2 cm geschoben, die eine zur Aufnahme der Nickelblechfahne geeignete Längsnut besaß. Die zu beschichtende Scheibe wurde nun bei horizontal gestellter Achse unter langsamer Rotation um die Achse (ca. 10 bis 20 Umdrehungen pro Minute) bis zur Achse in die Suspension getaucht. Nach wenigen Umdrehungen wurde das pastenbeladene Substrat über den Pastenspiegel gehoben und der Pastenüberschuß etwa 10 Sekunden lang bei höheren Drehzahlen abgeschleudert. In Abhängigkeit von der Drehzahl ergab sich folgende Katalysatorbelegung der getrockneten Elektroden:

| Drehzahl min.$^{-1}$ | Katalysatorbelegung mg.cm$^{-2}$ |
|---|---|
| 2.050 | 37,0 |
| 1.880 | 41,5 |
| 1.390 | 48,7 |
| 1.350 | 50,4 |
| 1.330 | 51,3 |

Schliffbilder der fertigen Elektroden zeigten beidseitig eine gleiche Schichtdicke von etwa 220 Micrometern und eine Eindringtiefe der Katalysatorschicht in das Diffusionsgerüst von je etwa 20 Micrometer.

Beispiel 2

A Herstellung der Katalysatorsuspension
Nach dem in Beispiel 1 beschriebenen Verfahren wurden aus 500 g Raneynickel mit 22 cm$^3$ Polytetrafluorethylendispersion, 262 cm$^3$ Wasser und 3,75 g Polyethylenoxid eine Katalysator-Suspension hergestellt, die 62,6 Gew.-% Raneynickel, etwa 2,4% Polytetrafluorethylen und etwa 0,45 Gew. -% Polyethylenoxid enthielt.
B Beschichtung der Substrate
Diffusionskörper wie in Beispiel 1 beschrieben wurden auf einer Achse befestigt. Die Substrate wurden dann bei vertikal gestellter Achse in die Suspension getaucht. Nach ungefähr 5 Sekunden wurden die Substrate aus der Suspension gezogen und bei einer Drehzahl von 600 Umdrehungen pro Minute wurde der Überschuß an Suspension in ca. 3 Sekunden abgeschleudert. Die Katalysatorbelegung betrug im Durchschnitt von 20 Substraten 62,2 Milligramm.cm$^{-2}$ bei einer Standardabweichung von nur 3,5%.

Beispiel 3

A Herstellung der Katalysatorsuspension
Es wurde dieselbe Suspension wie in Beispiel 2 benützt.
B Beschichten der Elektrode
Bei vertikal gestellter Achse wurden Substrate unterschiedlicher Porosität unter gleichen Bedingungen beschichtet: Substratkontakt mit der Paste 5 Sekunden, Schleuderdauer 4 Sekunden, Drehzahl 600 min$^{-1}$.

| Art | Gerüst Porosität % | Dicke mm | flächenbezogenes Gewicht der Beschichtung mg cm$^{-2}$ |
|---|---|---|---|
| I | (40) | 0,2 | 48,2 |
| II | 73 | 1,0 | 55,8 |
| III | 82 | 1,3 | 62,2 |
| IV | 85 | 1,8 | 63,3 |
| V | 90 | 1,5 | 67,4 |

Substrat I war ein Nickel-Lochblech mit einer freien Fläche von etwa 40 % und einem Lochdurchmesser von 1,25 mm, Substrat II war eine Sinternickelplatte für Nickelsinterfolienelektroden, Substrat III ein vernickeltes Kuststofasergerüst, Substrat IV ein Sinternickelgerüst aus Nickelpulver hoher Oberfläche und Substrat V ein Nickelfasergerüst hoher Porosität, das auf etwa 50 % seiner ursprünglichen Dicke verpreßt worden war.

**Patentansprüche**

1. Verfahren zur Herstellung von Katalysatorelektroden, wobei ein metallisch leitender, flächiger Trägerkörper mit einer pastösen, bindemittelhaltigen Katalysator-Suspension behandelt und anschließend getrocknet wird,
   **dadurch gekennzeichnet,**
   daß auf die Oberfläche des Trägerkörpers ein Überschuß der Katalysator-Suspension aufgebracht wird und der Überschuß durch Rotation des Trägerkörpers um eine senkrecht zu seiner Fläche stehende Achse abgeschleudert wird.

2. Verfahren nach Anspruch 1,
   **dadurch gekennzeichnet,**
   daß die Beschichtung durch Berühren der Oberfläche der Suspension mit der zu beschichtenden Trägerkörperfläche, durch Eintauchen der Trägerkörper in die Suspension oder durch Aufgießen der Suspension auf die Oberfläche des Trägerkörpers erfolgt.

3. Verfahren nach Anspruch 2,
   **dadurch gekennzeichnet,**
   daß die Beschichtung durch teilweises Eintauchen in die Suspension und langsame Rotation der senkrecht oder schräg zur Suspensionoberfläche angeordneten Trägerkörper erfolgt.

4. Verfahren nach einem oder mehreren der Ansprüche 1 bis 3,
   **dadurch gekennzeichnet,**
   daß der Überschuß an Suspension 2 bis 10 Sekunden aufrecht erhalten wird.

5. Verfahren nach einem oder mehreren der Ansprüche 1 bis 4,
   **dadurch gekennzeichnet,**
   daß der Überschuß der Suspension bei einer Drehzahl von 200 bis 2000 $min^{-1}$ 2 bis 10 Sekunden lang abgeschleudert wird.

6. Verfahren nach einem oder mehreren der Ansprüche 1 bis 5
   **dadurch gekennzeichnet,**
   daß man als Trägerkörper ein metallisch leitendes Fasergerüst verwendet.

7. Verwendung einer pastösen bindemittelhaltigen Katalysator-Suspension in einem Beschichtungsverfahren gemäß einem oder mehreren der Ansprüche 1 bis 6,
   **dadurch gekennzeichnet,**
   daß die Katalysator-Suspension eine dynamische Viskosität von 10 000 bis 50 000 mPa.s, bezogen auf eine Schergeschwindigkeit von D = 1.s⁻¹, eine Temperatur von 20°C und einen Feststoffgehalt von 55 bis 75 Gew.-% besitzt, wobei das Suspensionsmittel Wasser ist und die Suspension 0,1 bis 2 Gew.-% Binde- und/oder Verdickungsmittel, 50 bis 73 Gew.-% depyrophorisiertes Raneynickel und 2 bis 5 Gew.-% Polytetrafluorethylen enthält.

8. Verwendung einer Suspension nach Anspruch 7,
   **dadurch gekennzeichnet,**
   daß sie als Binde- und/oder Verdickungsmittel Methylzellulose, Polyvinylpyrrolidon, Polyethylenoxid oder Mischungen davon enthält.

9. Verwendung einer Suspension nach Anspruch 8,
   **dadurch gekennzeichnet,**
   daß das Polyethylenoxid ein Molekulargewicht von 600 000 oder größer besitzt.

## Claims

1. A method of manufacture of catalyst electrodes, comprising the treatment of a metallically conductive flat supporting body with a paste-like catalyst supension containing a binding agent and its subsequent drying, characterized in that an excess of catalyst suspension is applied onto the surface of the supporting body, and the excess is thrown off by rotating the supporting body around an axis situated perpendicularly to its surface.

2. A method according to claim 1 characterized in that coating is effected by stirring the surface of the suspension with the surface of the supporting body to be coated, by dipping the supporting body into the suspension or by pouring the suspension onto the surface of the supporting body.

3. A method according to claim 2, characterized in that coating is effected by partial dipping into the suspension and slow rotation of the supporting body mounted perpendicularly or slantwise to the surface of the suspension.

4. A method according to one or more of claims 1 to 3, characterized in that the excess of suspension is maintained for 2 to 10 seconds.

5. A method according to one or more of claims 1 to 4, characterized in that the excess suspension is spun off at a rotational speed of 200 to 2000 $min^{-1}$ for 2 to 10 seconds.

6. A method according to one or more of claims 1 to 5, characterized in that a metallically conducting frame is used as supporting body.

7. Utilization of a paste-like catalyst suspension containing a binding agent in a coating method according to one or more of claims 1 to 6, characterized in that the catalyst suspension has a dynamic viscosity of 10,000 to 50,000 mPa.s, related to a shearing speed of $D = 1.s^{-1}$, a temperature of 20°C and a solids content of 55 to 75% by weight, the suspension agent being water and the suspension containing 0.1 to 2% by weight of binding and/or thickening agent, 50 to 73% by weight of depyrophorized Raney nickel and 2 to 5% by weight of polytetrafluor ethylene.

8. Utilization of a suspension according to claim 7, characterized in that it contains a binding and/or thickening agent methyl cellulose, polyvinyl pyrrolidone, polyethylene oxide or mixtures thereof.

9. Utilization of a suspension according to claim 8, characterized in that the polyethylene oxide has a molecular weight of 600,000 or over.

## Revendications

1. Procédé de fabrication d'électrodes catalytiques, où un corps de support mince et métalliquement conducteur est traité avec une suspension pâteuse de catalyseur contenant un liant et est ensuite séché, caractérisé en ce que sur la surface du corps de support est déposé un excès de suspension de catalyseur et l'excès est éjecté par centrifugation en faisant tourner le corps de support autour d'un axe orienté perpendiculairement à sa surface.

2. Procédé selon la revendication 1, caractérisé en ce que le revêtement est effectué par mise en contact de la surface de suspension avec la surface de corps de support à revêtir, par plongée du corps de support dans la suspension ou par coulée de la suspension sur la surface du corps de support.

3. Procédé selon la revendication 2, caractérisé en ce que le revêtement est effectué par immersion partielle dans la suspension et rotation lente du corps de support disposé perpendiculairement ou en oblique par rapport à la surface de la suspension.

4. Procédé selon une ou plusieurs des revendications 1 à 3, caractérisé en ce que l'excès de suspension est maintenu pendant 2 à 10 secondes.

**5.** Procédé selon une ou plusieurs des revendications 1 à 4, caractérisé en ce que l'excès de suspension est enlevé par centrifugation à une vitesse de rotation de 200 à 2000 tr/min pendant 2 à 10 secondes.

**6.** Procédé selon une ou plusieurs des revendications 1 à 5, caractérisé en ce qu'on utilise comme corps de support un bâti fibreux métalliquement conducteur.

**7.** Utilisation d'une suspension pâteuse de catalyseur contenant un liant dans un procédé de revêtement conforme à une ou plusieurs des revendications 1 à 6, caractérisé en ce que la suspension de catalyseur a une viscosité dynamique de 10 000 à 50 000 mPa.s, rapportée à une vitesse de cisaillement de $D = 1.s^{-1}$, une température de 20°C est une teneur en solides de 55 à 75% en poids, l'agent de suspension étant de l'eau et la suspension contenant de 0,1 à 2% en poids de liant et/ou d'épaississant, de 50 à 73% en poids de nickel Raney depyrophosphorisé et de 2 à 5% en poids de polytétrafluoréthylène.

**8.** Utilisation d'une suspension selon la revendication 7, caractérisée en ce qu'elle contient comme liant et/ou comme épaississant de la méthyl-cellulose, du polyvinyl-pyrrolidon, de l'oxyde de polyéthylène ou leurs mélanges.

**9.** Utilisation d'une suspension selon la revendication 8, caractérisée en ce que l'oxyde de polyéthylène a un poids moléculaire de 600 000 ou plus.